# EUROPEAN PATENT SPECIFICATION

(11) **EP 4 117 823 B1**
(45) Date of publication and mention of the grant of the patent: **19.02.2025**
(21) Application number: 21710963.6
(22) Date of filing: 11.03.2021
(51) Int. Cl.: B04B 9/12, F16C 27/08, F16C 27/04, F16C 27/00, F16C 39/02, B04B 11/02, B04B 1/08, F16C 19/18, F16C 23/08, F16C 25/08, F16C 27/06, F16C 35/077

(54) **A BEARING MEMBER FOR SUPPORTING A ROTATABLE AXLE**
LAGEREINRICHTUNG ZUR UNTERSTÜTZUNG EINER DREHBAREN ACHSE
ÉLÉMENT DE PALIER POUR SUPPORTER UN ESSIEU ROTATIF

(30) Priority: 12.03.2020 EP 20162575
(43) Date of publication of application: 18.01.2023
(73) Proprietor: Alfa Laval Corporate AB, 221 00 Lund (SE)
(72) Inventor: ELIASSON, Thomas, 125 40 ÄLVSJÖ (SE)
(74) Representative: Alfa Laval Attorneys
(86) International application number: PCT/EP2021/056242
(87) International publication number: WO 2021/180875

(56) References cited:
- EP-A1- 0 884 108
- EP-A2- 0 799 975
- WO-A1-00/78465
- GB-A- 889 280
- US-A- 3 709 570

## Description

### TECHNICAL FIELD OF THE INVENTION

The present invention refers to a bearing member, such as a bearing member that allows the bearing housing to tilt in relation to its central axis.

### BACKGROUND OF THE INVENTION AND PRIOR ART

Centrifugal separators commonly comprise a centrifuge rotor mounted to a typically vertical spindle driven by a drive unit located beneath the centrifuge rotor. The centrifuge rotor typically has a relatively large weight in comparison to the drive unit. In addition, the centrifuge rotor is configured to receive a large amount of the product to be separated. The mass carried by the spindle during operation of the centrifugal separator is thus significant. Relatively small imbalances of the centrifuge rotor may create problems during operation, in particular when, during up-start, the centrifuge rotor has to pass the critical rotational speed in order to achieve the most appropriate supercritical rotational speed for the desired separation efficiency.

US 2015/283561 discloses a centrifugal separator comprising a centrifugal drum and a drive spindle rotatably mounted in a drive housing by a neck bearing and a foot bearing. The drive housing encloses a drive chamber and an electric motor which has a stator and a motor rotor. The motor rotor is disposed on the drive spindle and the stator is fixedly connected to the drive housing. An air gap exists between the stator and the motor rotor. The stator and the motor rotor are arranged between the neck bearing and the foot bearing. The foot bearing is designed as a pivot bearing and axially supports the centrifugal drum. The neck bearing is radially supported, via at least one elastic element, in a bearing housing which in its turn is fastened on the drive housing. The elastic element consists of two metal sleeves which are interconnected by means of a ring consisting of elastomer material.

The elastic elements of US 2015/283561 that support the neck bearing permit the spindle to make small radial movements during operation. However, the design may result in the spindle being slightly tilted when it is moved radially from a geometric center axis. The elastic elements supporting the neck bearing do not seem to be configured to compensate for such tilting. The tilting of the spindle may thus result in forces striving to rotate the inner and outer bearing rings of the neck bearing around a transversal axis in relation to each other, which may cause premature wear of the neck bearing.

US 9,427,747 discloses a centrifugal separator which is suitable for heavy duty applications and comprises a frame, a spindle and centrifuge rotor on the spindle. The centrifuge rotor comprises a rotor casing forming an inner separation space, an inlet for supply of a fluid and an outlet for discharge of a separated component. A drive motor having a stator and a rotor drives the spindle and the centrifuge rotor. The motor rotor is supported by a first bearing and second bearing. A coupling member connects the motor rotor and the spindle for transmitting a rotary movement from the motor rotor to the spindle. A third bearing supports the spindle so that it is radially elastic in relation to the frame for transmitting a first part of radial forces between the spindle and the frame. The coupling member comprises a lamella coupling or a universal coupling, and transmits a second part of the radial forces, which exists between the spindle and the frame, to the frame via the motor rotor and the first and the second bearings.

Spherical bearings may be used for supporting a rotating shaft that must move both rotationally and at a small angle. However, spherical bearings may be complex and expensive. There is therefore a need in the art for further, less complex solutions for supporting a rotating shaft in different kinds of apparatuses.

### SUMMARY OF THE INVENTION

The object of the present invention is to overcome the problems discussed above. In particular, it is aimed at a bearing member permitting tilting, or slight tilting, of a spindle during operation.

As an aspect of the present invention, there is provided the centrifugal separator initially defined, which is characterised in that that the upper bearing housing is mounted to the stationary frame via the elastic member and an upper tilting member permitting the spindle to tilt in relation to the central axis during operation of the centrifugal separator, wherein the elastic member and the upper tilting member are arranged one after the other in a radial direction.

According to an embodiment of the invention, the elastic member is located radially outside the tilting member. Alternatively, the elastic member may be located radially inside the tilting member.

By means of the upper tilting member, the forces, acting on the at least one bearing of the upper bearing housing and striving to rotate the bearing rings of the at least one bearing to each other and around a transversal axis, may be displaced from the bearing and radially outwards to the upper tilting member, which in turn permits the bearing housing to tilt in relation the central axis. Thus, torsional forces transverse to the spindle acting on the at least one bearing of the upper bearing housing when the spindle is tilted may be considerably reduced in comparison with the upper bearing housing being mounted directly, or only via the elastic member, in the stationary frame. Consequently, there may be no relative rotating movements between an inner bearing ring and an outer bearing ring of the one of more bearings of the upper bearing housing even if the spindle is tilted. The at least one bearing of the upper bearing housing may thus operate under low-force conditions even if the spindle is tilted. Moreover, the wear of the elastic member may be reduced in comparison with the upper bearing housing being mounted only via the elastic member in the stationary frame due to the reduced torsional forces. Consequently, there may be no relative rotating movements between an inner bearing ring and an outer bearing ring of the one of more bearings of the upper bearing housing even if the spindle is tilted.

According to an embodiment of the invention, the upper bearing housing is located between the rotating member of the drive unit and the centrifuge rotor.

According to an embodiment of the invention, the upper tilting member comprises a pack of annular disks extending around the upper bearing housing and being attached to the upper bearing housing and to the elastic member.

The pack of annular disks may be flexible. Each one of the annular disks may be flexible. The annular disks may adjoin each other in the pack of annular disks.

When subjected to bending stress, a tilting member comprising a pack of annular disks will bend easily in comparison with a tilting member made from one piece of homogenous material. Moreover, when a tilting member comprising a pack of annular disks is subjected to uniaxial stress, it is as strong as a tilting member made from one piece of homogenous material. Thus, the tilting member comprising a pack of annular disks provides the bendability to reduce the torsional load on the at least one bearing while being strong enough to support the spindle via the upper bearing housing.

According to an embodiment of the invention, the pack of annular disks of the upper tilting member is attached to the upper bearing housing by at least three primary attachment members equidistantly separated from each other around the annular disks, and attached to the elastic member by at least three secondary attachment members each being positioned between a respective pair of adjacent primary attachment members.

Such an alternating attachment of the pack of annular disks to the upper bearing housing and to the elastic member may ensure a rigid attachment to the upper bearing housing and to the elastic member, and a flexibility permitting the upper bearing housing and the spindle to tilt.

According to an embodiment of the invention, the pack of annular disks of the upper tilting member is attached to the stationary frame by at least three primary attachment members equidistantly separated from each other around the annular disks, and attached to the elastic member by at least three secondary attachment members each being positioned between a respective pair of adjacent primary attachment members.

Also such an alternating attachment of the pack of annular disks to the stationary frame and to the elastic member may ensure a rigid attachment to the stationary frame and to the elastic member, and a flexibility permitting the upper bearing housing and the spindle to tilt.

According to an embodiment of the invention, each of the primary and secondary attachment members comprises a screw bolt extending through a respective aperture through the pack of annular disks of the upper tilting member. Such screw bolts permit an easy and efficient mounting of the pack of annular disks to the upper bearing housing and the elastic member.

According to an embodiment of the invention, the at least one bearing comprises a first bearing comprising an outer bearing ring attached to the upper bearing housing and an inner bearing ring attached to the spindle, a second bearing comprising an outer bearing ring attached to the upper bearing housing and an inner bearing ring attached to the spindle, and possibly a third bearing comprising an outer bearing ring attached to the upper bearing housing and an inner bearing ring attached to the spindle. By arranging a number of bearings, i.e. at least the first bearing and the second bearing, in the upper bearing housing, a rigid support of the spindle is achieved.

According to an embodiment of the invention, the centrifugal separator comprises a lower bearing housing mounted to the stationary frame and supporting at least one bearing comprising an outer bearing ring attached to the lower bearing housing and an inner bearing ring attached to the spindle. The lower bearing housing may be provided outside the rotating member of the drive unit. The lower bearing housing and the at least one bearing may contribute to a more rigid support of the spindle and the centrifuge rotor.

According to an embodiment of the invention, the lower bearing housing is mounted to the stationary frame via a lower tilting member permitting the spindle to tilt in relation to the central axis_during operation of the centrifugal separator.

By means of the lower tilting member, the forces, acting on the at least one bearing of the lower bearing housing and striving to rotate the bearing rings of the at least one bearing in relation to each other and around a transversal axis, may be displaced from the bearing and radially outwards to the lower tilting member. The at least one bearing of the lower bearing housing may thus operate under low-force conditions even if the spindle is tilted._Consequently, there may be no relative rotating movements between an inner bearing ring and an outer bearing ring of the one of more bearings of the lower bearing housing even if the spindle is tilted.

According to an embodiment of the invention, the lower tilting member comprises a pack of annular disks extending around the lower bearing housing and being attached to the lower bearing housing and to the stationary frame. In contrast to the upper tilting member, the lower tilting member may thus be attached directly to the stationary frame without any intermediate elastic member.

The pack of annular disks or the lower tilting member may be flexible. Each of the annular disks may be flexible. The annular disks may adjoin each other in the pack of annular disks of the lower tilting member.

When subjected to bending stress, a tilting member comprising a pack of annular disks will bend easily in comparison with a tilting member made from one piece of homogenous material. Moreover, when a tilting member comprising a pack of annular disks is subjected to uniaxial stress, it is as strong as a tilting member made from one piece of homogenous material. Thus, the tilting member comprising a pack of annular disks provides the bendability to reduce the torsional load on the at least one bearing while being strong enough to support the spindle via the lower bearing housing.

According to an embodiment of the invention, the pack of annular disks of the lower tilting member is attached to the lower bearing housing by at least three primary attachment members equidistantly separated from each other around the annular disks, and to the stationary frame by at least three secondary attachment members each being positioned between a respective pair of adjacent primary attachment members. This alternating attachment of the pack of annular disks to the lower bearing housing and the stationary frame ensures a rigid attachment to the lower bearing housing and to the stationary frame, and a flexibility permitting the lower bearing housing and the spindle to tilt.

According to an embodiment of the invention, each of the primary and secondary attachment members attaching the lower tilting member comprises a screw bolt extending through a respective aperture through the pack of annular disks of the lower tilting member, wherein the screw bolts of the primary attachment members extend through the pack of annular disks in a first axial direction and the screw bolts of the secondary attachment members extend through the pack of annular disks in an opposite second axial direction. The screw bolts permit an easy and efficient mounting of the pack of annular disks to the lower bearing housing and the stationary frame.

According to an embodiment of the invention, the at least one bearing of the lower bearing housing comprises a first bearing comprising an outer bearing ring attached to the lower bearing housing and an inner bearing ring attached to the spindle, a second bearing comprising an outer bearing ring attached to the lower bearing housing and an inner bearing ring attached to the spindle, and possibly a third bearing comprising an outer bearing ring attached to the lower bearing housing and an inner bearing ring attached to the spindle. By arranging a number of bearings, i.e. at least the first bearing and the second bearing, in the lower bearing housing, a rigid support of the spindle is achieved.

According to an embodiment of the invention, the lower bearing housing comprises a lower convex spherical surface supported by a concave spherical surface provided on the stationary frame. The spherical surfaces may provide a lower support for the spindle and may provide a tilting point around which the spindle may tilt.

According to an embodiment of the invention, the rotating member of the drive unit is mounted on the spindle between the upper bearing housing and the lower bearing housing. The rotating member may thus be fixed to the spindle, which may be supported at both an upper end and a lower end of the rotating member.

According to an embodiment of the invention, the drive unit comprises an electric motor having a stator attached to the stationary frame and a motor rotor.

According to an embodiment of the invention, the rotating member comprises the motor rotor. The motor rotor may thus be provided on and around the spindle.

According to an embodiment of the invention, the spindle is hollow and surrounds the inlet for the product and/or the first outlet for the relatively light component. However, in embodiments, the spindle is solid.

The tilting member as discussed above may also be used in other applications than centrifugal separators. Thus, as a further aspect of the invention, there is provided a bearing member for supporting a rotatable axle, comprising
- a bearing housing;
- at least one bearing inserted into the bearing housing; wherein the bearing is configured to receive a rotatable shaft extending through the bearing; and
- a tilting member arranged around the bearing housing; wherein the tilting member comprises a pack of annular discs forming a through hole for receiving the bearing housing; wherein each of the annular discs comprises a plurality of apertures extending through each of the discs and wherein the tilting member comprises a sleeve element provided in each of the apertures for holding the annular discs together as a stack and arranged for receiving a fastening means for attaching the tilting member to said bearing housing or a stationary machine element;
   and wherein the bearing member further comprises
- at least one fastening element extending through a sleeve of the tilting member and attaching the tilting member to the bearing housing.

The tilting member is thus arranged for attaching a bearing housing to a stationary machine element to allow the bearing housing to tilt in relation to its central axis (X). The rotational axis of the at least one bearing may thus be parallel to the normal of the plane formed by the annular discs when the tilting member is mounted around the bearing housing.

This aspect is thus based on the inventor's insight that the tilting member with its disc pack may be used to hold a bearing in position. The disc pack is stiff in radial and polar direction but may be flexible in the axial direction. Due to this, the tilting torque is low. The disc pack contains multiple discs connected with sleeve elements. This is an advantage since multiple discs have a lower bending resistance than one disc with the same height. The tilting member of the present disclosure allows for a simpler ball bearing or roller bearing, such as a cylindrical roller bearing, an angular contact bearing or ball bearing to be used in applications where a sophisticated and expensive spherical bearing have been used for accommodating both static and dynamic misalignment.

As discussed above, forces acting on at least one bearing of a bearing housing striving to rotate the bearing rings of the bearing to each other and around a transversal axis, may be displaced from the bearing and radially outwards to the upper tilting member, which in turn permits a bearing housing to tilt in relation the central axis. Thus, torsional forces transverse to a rotating shaft acting on the bearing a bearing housing when the rotating shaft is tilted may be considerably reduced in comparison with a bearing housing being mounted directly in the stationary frame. Consequently, the tilting member of the present disclosure may provide for decreasing the relative rotating movements between an inner bearing ring and an outer bearing ring of even if the rotating shaft to which the bearing supports is tilted. The bearing may thus operate under low-force conditions even if the rotational shaft is tilted.

Further, a tilting member comprising a pack of annular disks will bend easily in comparison with a tilting member made from one piece of homogenous material. Moreover, when a tilting member comprising a pack of annular disks is subjected to uniaxial stress, it is as strong as a tilting member made from one piece of homogenous material. Thus, the tilting member comprising a pack of annular disks provides the bendability to reduce the torsional load on a bearing while being strong enough to support the rotatable shaft via the bearing housing.

The pack of annular discs are thus stacked. The discs of the pack may have been pressed together, such as with a pressure of at least 60 kN, so as to assure that there is no small play between the discs. Further, also the sleeve elements may have been pressed together with the pack so as to assure that there is a tight fit between sleeve member and the pack of annular discs. When mounted on the bearing housing, the pack of annular discs may be pretensioned with a certain spring force.

The sleeve elements used for holding the stack of annular discs together may have a through-going hole for receiving a fastening means, such as a screw member. The apertures of the tilting member may be equidistantly spaced around the annular discs. Thus, the sleeve elements may be equidistantly spaced around the annular discs.

Further, the body of the tilting member may be the pack of annular discs, meaning that the pack of annular discs may form the major portion of the tilting member. Consequently, the portion of the tilting member forming the through hole for the bearing housing may be the pack of discs only.

The pack of annular disks may be flexible. Each one of the annular disks may be flexible. The annular disks may adjoin each other in the pack of annular disks.

In embodiments, the pack of annular discs comprises at least two annular discs, such as at least four annular discs, such as at least eight annular discs.

In embodiments, he annular discs are metal lamellas, such as steel lamellas.

In embodiments, the annular discs are made from cold rolled sheet metal, such as cold rolled steel.

In embodiments, the at least one fastening element is attaching the tilting member to the bearing housing in every second aperture of the tilting member.

In embodiments, the bearing is a roller bearing other than a spherical roller bearing.

In embodiments, the thickness of the individual annular discs in the pack of annular discs is less than 5 mm, such as less than 1 mm, such as less than 0.5 mm. All annular discs of the pack may be of the same thickness.

The annular discs of the pack may have the form of a closed polygon with a plurality of corners, and the apertures may thus be arranged in the corners. As an example, the annular discs may comprise more than four, such as more than six, such as eight or more corners.

As an example, the annular discs may have the form of an octagon. The octagon shape may thus enclose the through-hole for receiving the bearing housing.

Thus, the pack of annular disks of the tilting member extends around the bearing housing, or bearing retainer, and is also attached to the bearing housing. The fastening element may for example be a screw element. As an example, the pack of annular disks of the tilting member may be attached to the bearing housing by at least three primary attachment members equidistantly separated from each other around the annular disks.

The annular discs of the tilting member may thus form a through hole that is larger than the diameter of the at least one bearing.

In embodiments, the bearing is a roller bearing, such as a cylindrical roller bearing. The roller bearing may be a roller bearing other than a spherical roller bearing. Thus, the bearing may be a roller bearing that does not permit angular rotation around a central point in two angled directions.

In embodiments, the at least one bearing comprises an outer bearing ring attached to the bearing housing and an inner bearing ring arranged for attachment to a rotatable shaft, such as a spindle. The at least one bearing may for example be one, two or three bearings.

The present disclosure also provides the tilting member discussed herein above as such, i.e. there is provided a tilting member arranged for attaching a bearing housing to a stationary machine element to allow the bearing housing to tilt in relation to its central axis, wherein the tilting member comprises a pack of annular discs forming a through hole for receiving a bearing housing; wherein each of the annular discs comprises a plurality of apertures extending through each of the discs and wherein the tilting member further comprises a sleeve element provided in each of the apertures for holding the annular discs together as a stack and for receiving a fastening means for attaching the tilting member to said bearing housing or said stationary machine element.

As a further aspect, there is provided an apparatus comprising
- a stationary machine element
- a rotatable shaft supported by at least one bearing member according to the above aspect; wherein the bearing housing of the bearing member is attached to the stationary machine element via the tilting member.

The apparatus may be any kind of apparatus comprising a rotatable shaft, such e.g. a wind turbine.

In embodiments, the apparatus is further comprising at least one fastening element attaching the tilting member to the bearing housing in every second aperture of the tilting member and attaching the tilting member to the stationary machine element in every second aperture of the tilting member.

As an example, the pack of annular disks of the tilting member may be attached to the bearing housing by at least three primary attachment members equidistantly separated from each other around the annular disks, and attached to the stationary machine element by at least three secondary attachment members each being positioned between a respective pair of adjacent primary attachment members.

Such an alternating attachment of the pack of annular disks to the bearing housing and to the stationary machine element may ensure a rigid attachment to the bearing housing and to the stationary machine element, and a flexibility permitting the bearing housing and the rotatable shaft to tilt.

In embodiments, each of the primary and secondary attachment members comprises a screw bolt extending through a respective aperture through the pack of annular disks of the tilting member. Such screw bolts permit an easy and efficient mounting of the pack of annular disks to the upper bearing housing and the elastic member.

### BRIEF DESCRIPTION OF THE DRAWINGS

The present invention will now be explained more closely by means of a description of various embodiments and with reference to the drawings attached hereto.
- Fig 1: discloses a sectional view of a centrifugal separator according to a first embodiment of the invention.
- Fig 2: discloses a sectional view of a drive unit of the centrifugal separator in Fig 1.
- Fig 3: discloses a sectional view through a stationary frame of the centrifugal separator along the line III-III in Fig 2.
- Fig 4: discloses a sectional view along the line IV-IV in Fig 3.
- Fig 5: discloses an enlarged part of the sectional view in Fig 4.
- Fig 6: discloses a sectional view along the line VI-VI in Fig 3.
- Fig 7: discloses an enlarged part of the sectional view in Fig 6.
- Fig 8: discloses a perspective view from above of a part of the stationary frame.
- Fig 9: discloses a sectional view through the stationary frame of the centrifugal separator along the line IX-IX in Fig 2.
- Fig 10: discloses a sectional view along the line X-X in Fig 9.
- Fig 11: discloses an enlarged part of the sectional view in Fig 10.
- Fig 12: discloses a sectional view along the line XI-XI in Fig 9.
- Fig 13: discloses an enlarged part of the sectional view in Fig 12.
- Fig 14: discloses a perspective view of a lower part of the stationary.
- Fig 15: discloses a sectional view similar to the one of Fig 3 through a stationary frame of a centrifugal separator according to a second embodiment of the invention.
- Fig 16: discloses a sectional view along the line XVI-XVI in Fig 15.
- Fig 17: discloses an enlarged part of the sectional view in Fig 16.
- Fig 18: discloses a sectional view along the line XVIII-XVIII in Fig 15.
- Fig 19: discloses an enlarged part of the sectional view in Fig 18.
- Fig 20: discloses a perspective view from above of a part of the stationary frame in Fig 15.
- Fig 21: discloses a tilting member.
- Fig 22: shows a close-up view of a tilting member.
- Fig 23: discloses a bearing member according to an embodiment of the present invention.
- Fig 24: discloses an apparatus according to an embodiment of the present invention.

### DETAILED DESCRIPTION OF VARIOUS EMBODIMENTS OF THE INVENTION

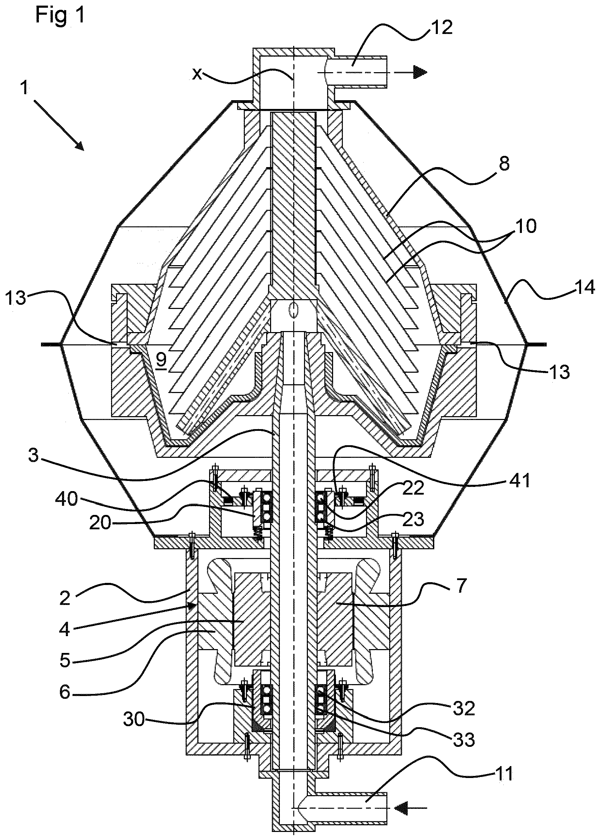

Fig 1 discloses a first embodiment of a centrifugal separator 1 for processing a product by separating a relatively heavy component and a relatively light component from the product. The centrifugal separator 1 comprises a stationary frame 2 and a spindle 3 extending in parallel with a central axis x.

The spindle 3 is supported by the stationary frame 2 and permitted to rotate in relation to the stationary frame 2. The central axis x extends through a lower end and an upper end of the centrifugal separator 1, as indicated in Fig 1. It shall be noted that the centrifugal separator 1 may be used in another position than with the central axis x extending vertically as shown in Fig1.

The stationary frame 2 may also comprise a suitable base element (not disclosed) permitting the stationary frame 2 and the centrifugal separator 1 to be positioned on a ground, a floor or the like.

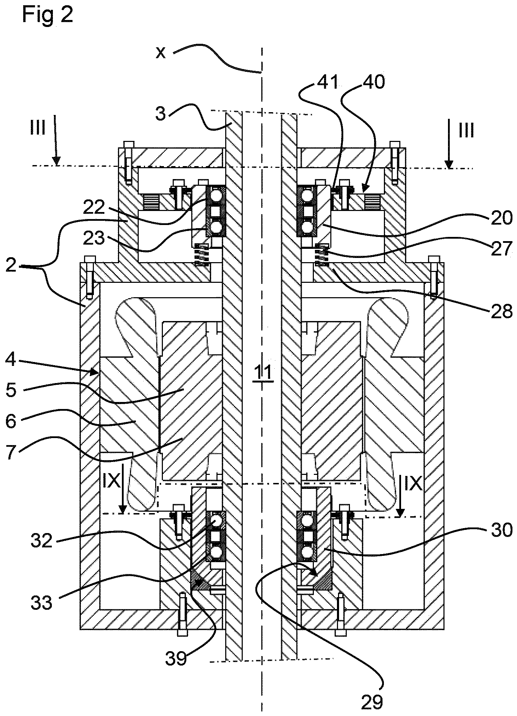

The centrifugal separator 1 comprises a drive unit 4, see also Fig 2, comprising a rotating member 5 mounted on the spindle 3. The drive unit 4 is configured to rotate the spindle 3 in relation to the stationary frame 2, essentially around the central axis x. The drive unit 4 may comprise an electric motor having a stator 6 attached to the stationary frame 2 and a motor rotor 7. In the embodiments disclosed, the rotating member 5 comprises or forms the motor rotor 7 of the electric motor.

Furthermore, the centrifugal separator 1 comprises a centrifuge rotor 8 that is mounted to an upper end of the spindle 3 to rotate together with the spindle 3. The centrifuge rotor 8 encloses a separation space 9. The centrifuge rotor 8 may comprise a stack of separation disks 10 provided in the separation space 9. The separation disks 10 may be frusto-conical.

An inlet 11 for the product extends to the separation space 9. A first outlet 12 for the relatively light component and a second outlet 13 for the relatively heavy component extends from the separation space 9. The second outlet 13 may comprise a plurality of peripheral ports that extend through the centrifuge rotor 8.

The peripheral ports may be openable for intermittent discharge of the relatively heavy component, such as sludge, from the separation space 9.

In the embodiments disclosed, the inlet 11 is located in the proximity of the lower end of the centrifugal separator 1. The first outlet 12 is located in the proximity of the upper end of the centrifugal separator 1.

The spindle 3 may be hollow and form an inner channel to the separation space 9. In the embodiments disclosed, the inlet 11 for the product extends through the inner channel of the hollow spindle 3 to the inner space 9 of the centrifuge rotor 8. Alternatively, the first outlet 12 for the relatively light component may extend through the hollow spindle 3. According to a further alternative both the inlet 11 and the outlet 12 may be arranged to extend through the hollow spindle 3.

According to a still further alternative, the spindle 3 may lack any inlet or outlet, wherein both the inlet 11 and the first outlet 12 may be located in the proximity of the upper end of the centrifugal separator 1.

The centrifugal separator 1 also comprises an outer casing 14 attached to the stationary frame 2 and enclosing the centrifuge rotor 8.

In the embodiments disclosed, the centrifugal separator 1 comprises an upper bearing housing 20 and a lower bearing housing 30. The upper bearing housing 20 may be located between the rotating member 5 of the drive unit 4 and the centrifuge rotor 8. The lower bearing housing 30 may be provided outside the rotating member 5 of the drive unit 4, i.e. between the rotating member 5 of the drive unit 4 and the lower end of the centrifugal separator 1.

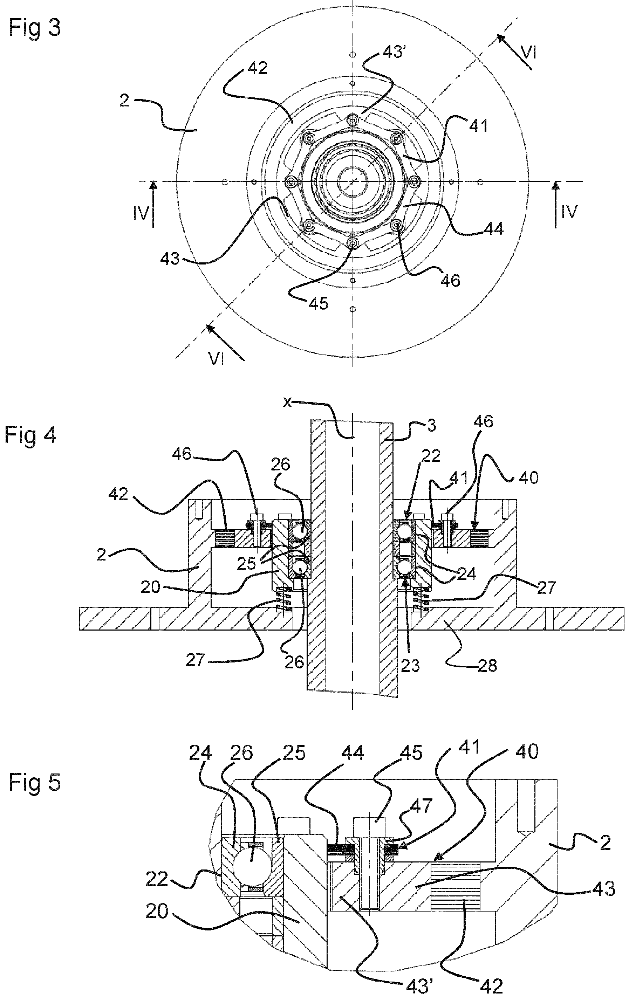

The upper bearing housing 20 is mounted to the stationary frame 2, see also Fig 4. In the embodiments disclosed, the upper bearing housing 20 supports a first bearing 22 comprising an outer bearing ring 24 attached to the upper bearing housing 20 and an inner bearing ring 25 attached to the spindle 3, and a second bearing 23 comprising an outer bearing ring 24 attached to the upper bearing housing 20 and an inner bearing ring 25 attached to the spindle 3. Roller elements 26 may be provided between the outer bearing ring 24 and the inner bearing ring 25.

The first and/or second bearings 22, 23 of the upper bearing housing 20 may be configured to provide radial support to the spindle 3, and possibly also axial support in order to carry the load of the centrifuge rotor 8.

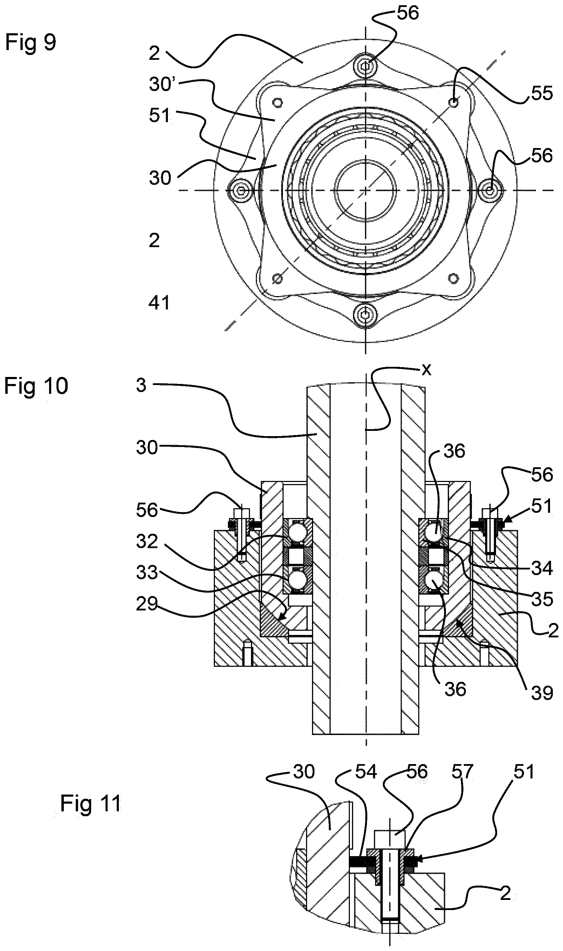

The lower bearing housing 30 is mounted to the stationary frame 2, see also Fig 10. In the embodiments disclosed, the lower bearing housing 30 supports a first bearing 32 comprising an outer bearing ring 34 attached to the lower bearing housing 30 and an inner bearing ring 35 attached to the spindle 3, and a second bearing 33 comprising an outer bearing ring 34 attached to the lower bearing housing 30 and an inner bearing ring 35 attached to the spindle 3. Roller elements 36 may be provided between the outer bearing ring 34 and the inner bearing ring 35.

The first and/or second bearings 32, 33 of the lower bearing housing 30 may be configured to provide radial support to the spindle 3, and possibly also axial support in order to carry the load of the centrifuge rotor 8.

The upper bearing housing 20 is mounted to the stationary frame 2 via an elastic member 40 permitting the upper bearing housing 20 and thus the spindle 3 to move radially during the rotation of the spindle 3.

In the first embodiment, the upper bearing housing 20 is mounted to the elastic member 40 via an upper tilting member 41 permitting the spindle 3 to tilt in relation to the central axis x.

In the embodiments disclosed, the elastic member 40 comprises an annular elastic element 42 and a ring element 43. The elastic element 42 is attached to the frame 2 and the ring element 43 is attached to the tilting member 41.

The elastic element 42 may be made of a rubber material, such as e.g. nitrile rubber.

In the first embodiment, the elastic member 40 is located radially outside the tilting member 41, wherein the elastic element 42 may be located outside the ring element 43.

In addition to the elastic member 40 and the tilting member 41, the upper bearing housing 20 may be supported by a plurality of spring elements 27 circumferentially distributed around the spindle 3. The spring elements 27 may rest against an upper intermediate wall 28 of the stationary frame 2 and may support the upper bearing housing 20 from beneath, as can be seen in Figs 2, 4 and 6. The spring elements 27 permit the upper bearing housing 20 to move resiliently in an axial direction.

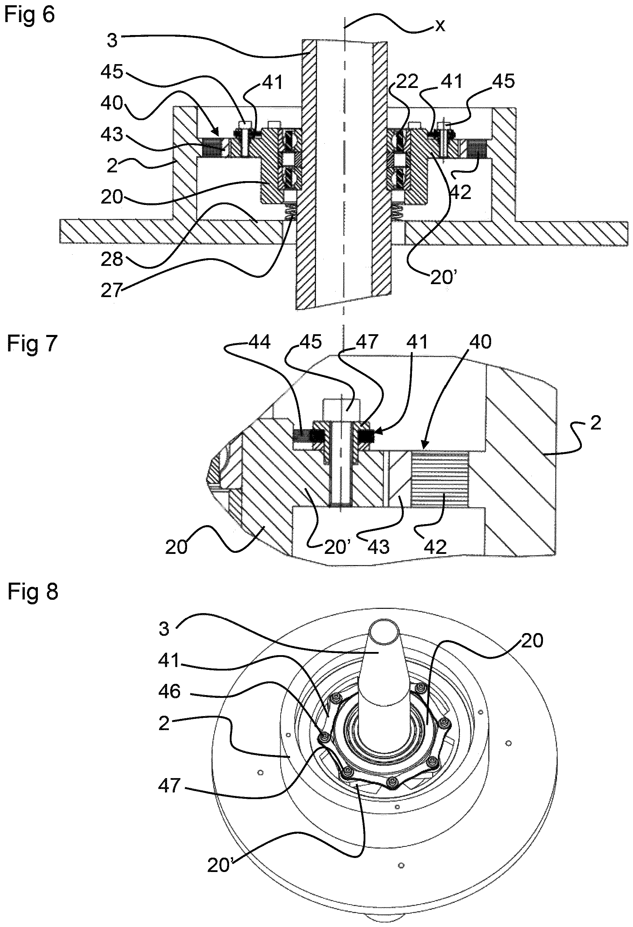

The upper tilting member 41 may comprise a pack of annular disks 44 extending around the upper bearing housing 20 and being attached to the upper bearing housing 20 and to the ring element 43 of the elastic member 40, see Figs 6 and 4.

The pack of annular disks 44 may comprise a plurality of annular disks 44, which may be identical with each other. Each of the annular disks 44 may be made from cold rolled sheet metal. Thus, a strong and flexible upper tilting member 41 may be provided, which has superior material properties in the context of the herein discussed tilting member as compared to hot rolled sheet metal. The annular disks 44 may be made from steel, such as stainless steel, spring steel, or similar, i.e. such as cold rolled steel sheet, cold rolled stainless steel sheet, cold rolled spring steel sheet, etc. A body of the upper tilting member 41 may be made up of annular disks 44 only.

In the embodiments disclosed, the pack of annular disks 44 comprises eight equidistant apertures extending through each of the annular disks 44. A respective sleeve element 47 is provided in each of the apertures. The sleeve element 47 is configured to keep the annular disks 44 together, and thus to ensure the integrity of the pack upper tilting element 41. Each of the sleeve elements 47 has a through-going hole as can be seen in Figs and 7.

In the first embodiment, the pack of annular disks 44 of the upper tilting member 41 is attached to the upper bearing housing 20 by four primary attachment members 45 equidistantly separated from each other around the annular disks 44, see Fig 6. In particular, the upper tilting member 41 may be attached to four radially extending projections 20' of the upper bearing housing 20, see Figs 7 and 8.

Furthermore, the pack of annular disks 44 of the upper tilting member 41 may be attached to ring element 43 of the elastic member 40 by four secondary attachment members 46 each being positioned between a respective pair of adjacent primary attachment members 45, see Fig 4. In particular, the upper tilting member 41 may be attached to four radially extending projections 43' of the ring element 43, see Figs 5 and 8.

Each of the primary and secondary attachment members 45, 46 may comprise a screw bolt extending through the hole of the sleeve element 47 of a respective one of the apertures through the pack of annular disks 44 of the upper tilting member 41, wherein the screw bolts of the primary attachment members 45 may engage a respective threaded hole into a respective one of the projections 20' of the upper bearing housing 20 and the screw bolts of the secondary attachment members 46 may engage a respective threaded hole into a respective one of the projections 43' of the ring element 43 of the elastic member 40.

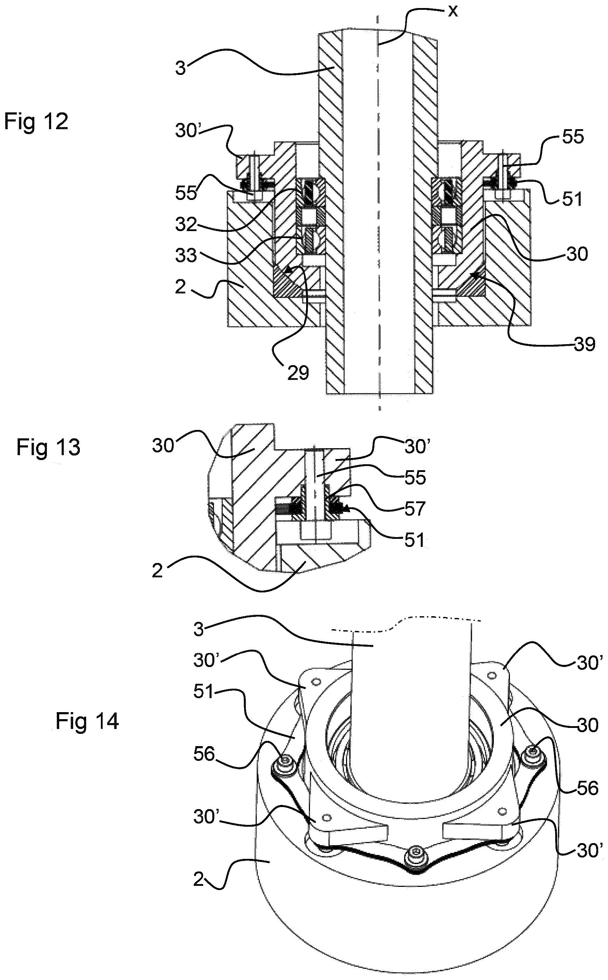

The lower bearing housing 30 may be mounted to the stationary frame 2 via a lower tilting member 51 permitting the spindle 3 to tilt in relation to the central axis x. In the embodiments disclosed, the lower tilting member 51 comprises a pack of annular disks 54 extending around the lower bearing housing 30. The pack of annular disks 54 are attached to the lower bearing housing 30 and to the stationary frame 2, as can be seen in Figs 12 and 10.

Also the pack of annular disks 54 at the lower tilting member 51 may comprise a plurality of annular disks 54, which may identical with each other. Thus, a strong and flexible lower tilting member 51 may be provided, which has superior material properties in the context of the herein discussed tilting member as compared to hot rolled sheet metal. The annular disks 54 may be made from steel, such as stainless steel, spring steel, or similar, i.e. such as cold rolled steel sheet, cold rolled stainless steel sheet, cold rolled spring steel sheet, etc. A body of the lower tilting member 51 may be made up of annular disks 54 only.

In the embodiments disclosed, the pack of annular disks 54 comprises eight equidistant apertures extending through each of the annular disks 54. A respective sleeve element 57 is provided in each of the apertures. The sleeve element 57 is configured to keep the annular disks 54 together, and thus to ensure the integrity of the pack lower tilting element 51. Each of the sleeve elements 57 has a through-going hole as can be seen in Fig 13.

In the embodiments disclosed, the pack of annular disks 54 of the lower tilting member 51 is attached to the lower bearing housing 30 by four primary attachment members 55 equidistantly separated from each other around the annular disks 54, see Fig 12. In particular, the lower tilting member 51 may be attached to radially extending projections 30' of the lower bearing housing 30, see Fig 13.

Furthermore, the pack of annular disks 54 may be attached to the stationary frame 2 by four secondary attachment members 56 each being positioned between a respective pair of adjacent primary attachment members 55, see Figs 9-11.

Each of the primary attachment members 55 and the secondary attachment members 56 attaching the lower tilting member 51 comprises a screw bolt extending through the hole of the sleeve element 57 of a respective one of the apertures through the pack of annular disks 54 of the lower tilting member 51.

The screw bolts of the primary attachment members 55 may extend through the pack of annular disks 55 in a first axial direction upwards as can be seen in Fig 12. The screw bolts of the secondary attachment members 56 may extend through the pack of annular disks 54 in an opposite second axial direction downwards as can be seen in Fig 10.

The lower bearing housing 30 may comprise a lower convex spherical surface 39 that is supported by and may rest against a concave spherical surface 29 provided on the stationary frame 2, see Figs 2 and 12. The spherical surfaces 29, 39 may provide a lower support for the spindle 3 and may provide a tilting point around which the spindle 3 may tilt.

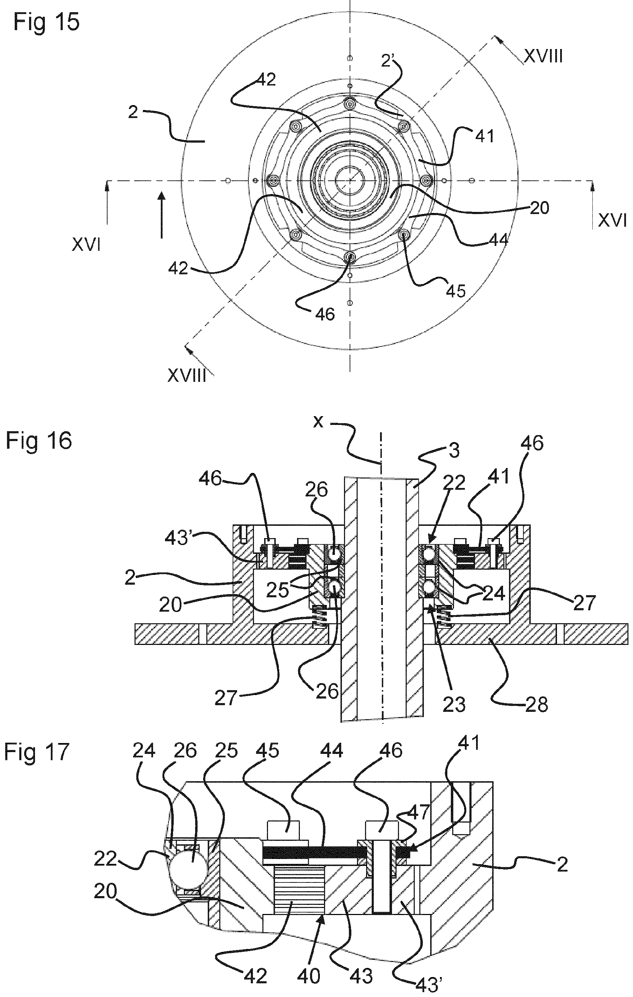

Figs 15-20 refers to a second embodiment which differs from the first embodiment only with respect to the attachment of the upper bearing housing 20, and in particular through the positioning of the elastic member 40 and the tilting member 41 in relation to each other. In the second embodiment, the elastic member 40 is located radially inside the tilting member 41. In the second embodiment, the configuration and arrangement of the lower bearing housing 30 are the same as in the first embodiment.

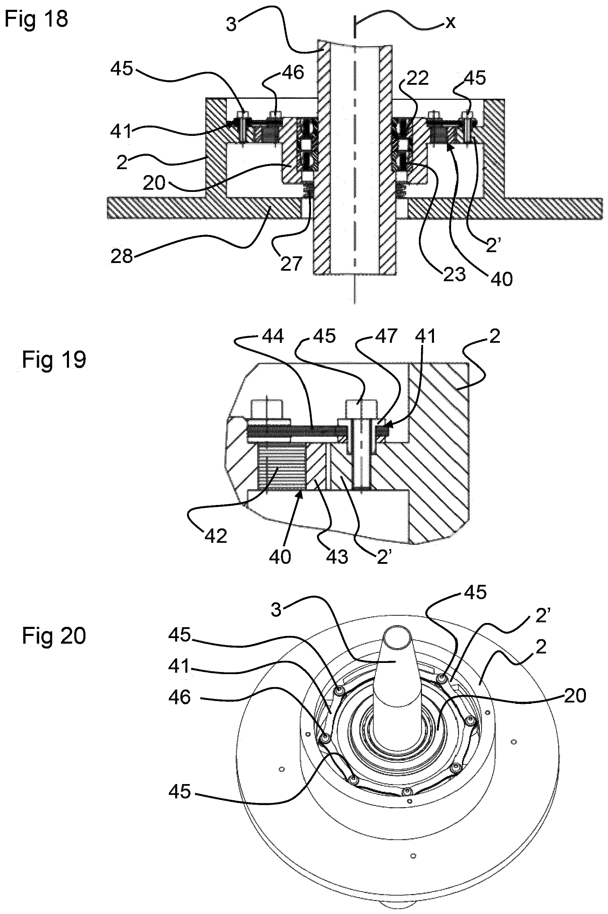

Also in the second embodiment, the elastic member 40 comprises an annular elastic element 42 and a ring element 43, as can be seen in Figs 17 and 19, but the elastic element 42 is located radially inside the ring element 43. The elastic element 42 is attached to the upper bearing housing 20 and the ring element 43 is attached to the tilting member 41.

In the second embodiment, the pack of annular disks 44 of the upper tilting member 41 is attached to the stationary frame 2 by four primary attachment members 45 equidistantly separated from each other around the annular disks 44, see Figs 18-20. In particular, the upper tilting member 41 may be attached to four radially extending projections 2' of the stationary frame 2, see Figs 19 and 20.

Furthermore, the pack of annular disks 44 of the upper tilting member 41 may be attached to ring element 43 of the elastic member 40 by four secondary attachment members 46 each being positioned between a respective pair of adjacent primary attachment members 45, see Figs 15-17. In particular, the upper tilting member 41 may be attached to four radially extending projections 43' of the ring element 43, see Figs 16 and 17.

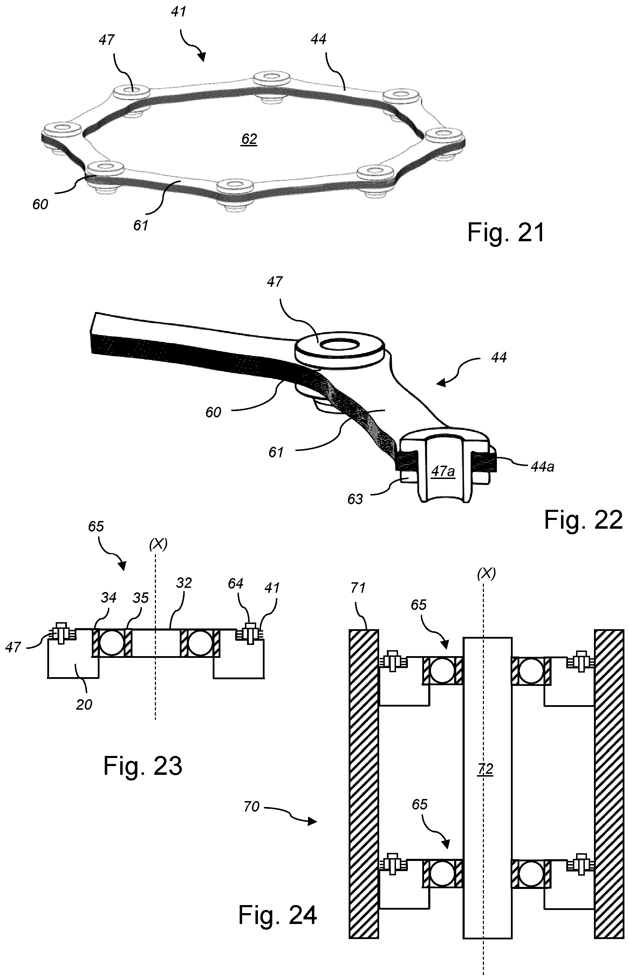

Figs. 21 and 22 further shows a tilting member 41 that may be used in a bearing member according to the present invention. It is to be understood that the tilting member 41 discussed herein is not only useful for supporting the bearing housing of a centrifugal separator but may be used in other apparatuses as well. Figs. 21 and 22 show a tilting member 41 in the form of a pack of annular discs 44. The tilting member 41 is arranged for attaching a bearing housing 20 to a stationary machine element 71. Thereby it may allow the bearing housing 20 to tilt in relation to its central axis (X), i.e. the axis of rotation of the actual bearing arranged within the bearing housing. The tilting member 41 comprises a pack of annular discs 44 forming a through hole 62. This through hole 62 is thus for receiving a bearing housing 20 or a portion of a bearing housing 20

Fig. 22 shows a close-up view of a portion of the tilting member 41 and the pack of annular discs 44. An annular disc 44a comprises a plurality of straight portions 61 connected by corners 60 to form a closed polygon. In the embodiment shown in Figs. 21 and 22, the pack of annular discs 44 forms an octagon. Moreover, each of the annular discs 44 comprises a plurality of apertures extending through each of the discs 44a. The apertures may be located in the corners 60 of the annular discs 44. The tilting element 41 further comprises sleeve elements 47 provided in each of the apertures for holding the annular discs 44 together as a stack. Further, the sleeve elements 47 have a through opening 47a for receiving a fastening means 64, such as a screw member. The fastening means 64 is used for attaching the tilting member 41 to a bearing housing 20 or a stationary machine element 71. Some of the sleeve elements may be used for attaching the tilting member to a bearing housing 20, whereas other of the sleeve elements may be used for attaching the tilting member to a stationary machine element 71. The sleeve elements 47 may have a flange extending out on the upper surface of the pack of annular discs 44 and a washer 63 on the opposite side of the pack of annular discs 47.

As an example, the straight portions may have a width that is smaller than the through hole 62 formed by the annular discs. As an example, the diameter of the through hole 62 may be at least five times, such as at least ten times, larger than the width of the straight portion 61 of the discs 44.

The pack of annular discs 44 comprises in this embodiment more than eight annular discs. The annular discs are in the form of a steel lamella, with a thickness of about 0.5 mm.

Fig. 23 schematically illustrates a bearing member 65 comprising a bearing housing 20. The bearing housing 20 is thus a retainer for the bearing 32. In this embodiment, the bearing housing comprises a single bearing 32, but the bearing housing may also retain more than one bearing 32, such as at least two bearings 32. The bearing 32 is thus inserted into the bearing housing 20 and may have its central through hole such it may receive and support a rotatable shaft extending through the bearing 32. A tilting member 41, such as the tilting member discussed in relation to Fig. 21 and 22 above, is arranged around an upper portion of the bearing housing 20. Further, there are fastening elements 64, such as screws, extending through some, but not all, of the sleeve elements 47. These fastening elements 64 are used to attach the tilting member 41 to the bearing housing 20. The sleeve elements 47 in which there is no fastening element 64 attaching the tilting member to the bearing housing 20 may be used for attaching the whole bearing member 65 to a stationary machine element 71. As discussed herein above, the design of the tilting member 41 makes it possible to use other bearings than spherical roller bearings for supporting a rotatable shaft 72. Thus, the tilting member 41 of the present disclosure still allows some change in the alignment of the rotational axis during use, e.g. during the rotational motion of the rotatable shaft. This is advantageous, since plain roller bearings, such as a cylindrical roller bearing or a plain roller bearing, may be used instead of a spherical bearing

Fig. 24 discloses schematically an apparatus 70 of the present invention that comprises the bearing member 65 and the tilting member 41. The apparatus 70 comprises a stationary machine element 71 and a rotatable shaft 72 that is rotatable around axis of rotation (X). the rotatable shaft 72 is supported by the stationary machine element 71 by at least one bearing member 65. In Fig. 24, the rotatable shaft 72 is supported by two bearing members 65, such as two bearing members 65 as discussed in relation to Fig. 23 above. The bearing members 65 could also be mounted with a spring element (not shown) under one or both of the bearing housings 20. In this way, the bearing members 20 of the apparatus could better withstand any axial forces. The tilting member 41 of the bearing member 47 is attached to both the bearing housing 20 and to the stationary machine element 71. As an example, the tilting member 41 may be attached to the bearing housing 20 via fastening members 64 arranged in every second sleeve element and to the stationary machine element 71 via fastening members 64 arranged in the remaining sleeve elements 47. In Fig. 22, the axis of rotation is vertical. However, the axis of rotation may as well be a horizontal axis. The apparatus 70 may be any kind of apparatus having a rotatable shaft. As an example, the apparatus 70 may be any kind of apparatus in which rotational motion must be allowed to change the alignment of the rotation axis of the rotatable shaft.

The present invention is not limited to the embodiments disclosed but may be varied and modified within the scope of the following claims.

## Claims

1. A bearing member (65) for supporting a rotatable axle, comprising
- a bearing housing (20);
- at least one bearing (32) inserted into the bearing housing (20); wherein the bearing (32) is configured to receive a rotatable shaft (72) extending through the bearing; and
- a tilting member (41) arranged around the bearing housing (20); **characterised in that** the tilting member (41) comprises a pack of annular discs (44) forming a through hole (62) for receiving said bearing housing (20); wherein each of the annular discs (44) comprises a plurality of apertures extending through each of the discs and wherein the tilting member (41) further comprises a sleeve element (47) provided in each of the apertures for holding the annular discs (44) together as a stack and arranged for receiving a fastening means for attaching the tilting member (41) to said bearing housing (20) or a stationary machine element (71);
and wherein the bearing member (65) further comprises
- at least one fastening element (64) extending through a sleeve (47) of the tilting member (41) and attaching the tilting member (41) to the bearing housing (20).

2. A bearing member (65) according to claim 1, wherein the pack of annular discs (44) comprises at least four annular discs, such as at least eight annular discs.

3. A bearing member (65) according to claim 1 or 2, wherein the annular discs (44) are metal lamellas, such as steel lamellas.

4. A bearing member (65) according to any previous claim, wherein the annular discs (44) of the pack has the form of a closed polygon with a plurality of corners (60), and wherein said apertures are arranged in said corners (60).

5. A bearing member (65) according to claim 4, wherein the annular discs (44) has the form of an octagon.

6. A bearing member (65) according to any previous claim, wherein the annular discs (44) are made from cold rolled sheet metal, such as cold rolled steel.

7. A bearing member (65) according to any previous claim, wherein the thickness of the individual annular discs in the pack of annular discs is less than 1 mm.

8. A bearing member (65) according to any previous claim, wherein the at least one fastening element (64) is attaching the tilting member (41) to the bearing housing (20) in every second aperture of the tilting member (41).

9. A bearing member (65) according to any previous claim, wherein the bearing (32) is a roller bearing other than a spherical roller bearing.

10. An apparatus (70) comprising
- a stationary machine element (71);
- a rotatable shaft (72) supported by at least one bearing member (65) according to any one of claims 1-9; wherein the bearing housing (20) of the bearing member (65) is further attached to the stationary machine element (71) via said tilting member (41).

11. An apparatus according to claim 10, further comprising at least one fastening element (64) attaching the tilting member (41) to the bearing housing (20) in every second aperture of the tilting member (41) and attaching the tilting member (41) to the stationary machine element (71) in every second aperture of the tilting member (41).

12. An apparatus (70) according to claim 10 or 11, wherein the rotatable shaft (72) is a vertical shaft.

13. An apparatus (70) according to claim 10 or 11, wherein the rotatable shaft (72) is a horizontal shaft.

## Patentansprüche

1. Lagerelement (65) zum Tragen einer drehbaren Achse, das Folgendes umfasst:
- ein Lagergehäuse (20),
- mindestens ein Lager (32), das in das Lagergehäuse (20) eingesetzt ist; wobei das Lager (32) dafür konfiguriert ist, eine drehbare Welle (72) aufzunehmen, die sich durch das Lager erstreckt, und
- ein Neigungselement (41), das um das Lagergehäuse (20) angeordnet ist; **dadurch gekennzeichnet, dass** das Neigungselement (41) ein Paket von ringförmigen Scheiben (44) umfasst, das ein Durchgangsloch (62) zum Aufnehmen des Lagergehäuses (20) bildet; wobei jede der ringförmigen Scheiben (44) eine Vielzahl von Öffnungen umfasst, die sich durch jede der Scheiben erstrecken, und wobei das Neigungselement (41) ferner ein Buchsenelement (47) umfasst, das in jeder der Öffnungen zum Zusammenhalten der ringförmigen Scheiben (44) als ein Stapel bereitgestellt ist und zum Aufnehmen eines Befestigungsmittels zum Anbringen des Neigungselements (41) an dem Lagergehäuse (20) oder einem unbeweglichen Maschinenelement (71) angeordnet ist,
und wobei das Lagerelement (65) ferner Folgendes umfasst:
- mindestens ein Befestigungselement (64), das sich durch eine Buchse (47) des Neigungselements (41) erstreckt und das Neigungselement (41) an dem Lagergehäuse (20) anbringt.

2. Lagerelement (65) nach Anspruch 1, wobei das Paket von ringförmigen Scheiben (44) mindestens vier ringförmige Scheiben, wie beispielsweise mindestens acht ringförmige Scheiben, umfasst.

3. Lagerelement (65) nach Anspruch 1 oder 2, wobei die ringförmigen Scheiben (44) Metall-Lamellen, wie beispielsweise Stahl-Lamellen, sind.

4. Lagerelement (65) nach einem der vorhergehenden Ansprüche, wobei die ringförmigen Scheiben (44) des Pakets die Form eines geschlossenen Vielecks mit einer Vielzahl von Ecken (60) aufweisen, und wobei die Öffnungen in den Ecken (60) angeordnet sind.

5. Lagerelement (65) nach Anspruch 4, wobei die ringförmigen Scheiben (44) die Form eines Achtecks aufweisen.

6. Lagerelement (65) nach einem der vorhergehenden Ansprüche, wobei die ringförmigen Scheiben (44) aus kalt gewalztem Blech, wie beispielsweise kalt gewalztem Stahl, hergestellt sind.

7. Lagerelement (65) nach einem der vorhergehenden Ansprüche, wobei die Dicke der einzelnen ringförmigen Scheiben in dem Paket von ringförmigen Scheiben geringer als 1 mm ist.

8. Lagerelement (65) nach einem der vorhergehenden Ansprüche, wobei das mindestens eine Befestigungselement (64) das Neigungselement (41) in jeder zweiten Öffnung des Neigungselements (41) an dem Lagergehäuse (20) anbringt.

9. Lagerelement (65) nach einem der vorhergehenden Ansprüche, wobei das Lager (32) ein anderes Rollenlager als ein Pendelrollenlager ist.

10. Vorrichtung (70), die Folgendes umfasst:
- ein unbewegliches Maschinenelement (71),
- eine drehbare Welle (72), die durch mindestens ein Lagerelement (65) nach einem der Ansprüche 1 bis 9 getragen wird; wobei das Lagergehäuse (20) des Lagerelements (65) ferner über das Neigungselement (41) an dem unbeweglichen Maschinenelement (71) angebracht ist.

11. Vorrichtung nach Anspruch 10, die ferner mindestens ein Befestigungselement (64) umfasst, welches das Neigungselement (41) in jeder zweiten Öffnung des Neigungselements (41) an dem Lagergehäuse (20) anbringt und das Neigungselement (41) in jeder zweiten Öffnung des Neigungselements (41) an dem unbeweglichen Maschinenelement (71) anbringt.

12. Vorrichtung (70) nach Anspruch 10 oder 11, wobei die drehbare Welle (72) eine vertikale Welle ist.

13. Vorrichtung (70) nach Anspruch 10 oder 11, wobei die drehbare Welle (72) eine horizontale Welle ist.

## Revendications

1. Élément de palier (65) pour supporter un essieu rotatif, comprenant
- un logement de palier (20) ;
- au moins un palier (32) inséré dans le logement de palier (20) ; dans lequel le palier (32) est configuré pour recevoir un arbre rotatif (72) s'étendant à travers le palier ; et
- un élément d'inclinaison (41) agencé autour du logement de palier (20) ; **caractérisé en ce que** l'élément d'inclinaison (41) comprend un paquet de disques annulaires (44) formant un trou traversant (62) pour recevoir ledit logement de palier (20) ; dans lequel chacun des disques annulaires (44) comprend une pluralité d'ouvertures s'étendant à travers chacun des disques et dans lequel l'élément d'inclinaison (41) comprend en outre un élément de manchon (47) fourni dans chacune des ouvertures pour maintenir ensemble les disques annulaires (44) comme un empilement et agencé pour recevoir un élément de fixation pour attacher l'élément d'inclinaison (41) audit logement de palier (20) ou à un élément de machine fixe (71) ;
et dans lequel l'élément de palier (65) comprend en outre
- au moins un élément de fixation (64) s'étendant à travers un manchon (47) de l'élément d'inclinaison (41) et attachant l'élément d'inclinaison (41) au logement de palier (20).

2. Élément de palier (65) selon la revendication 1, dans lequel le paquet de disques annulaires (44) comprend au moins quatre disques annulaires, tels qu'au moins huit disques annulaires.

3. Élément de palier (65) selon la revendication 1 ou 2, dans lequel les disques annulaires (44) sont des lamelles métalliques, telles que des lamelles en acier.

4. Élément de palier (65) selon l'une des revendications précédentes, dans lequel les disques annulaires (44) du paquet présentent la forme d'un polygone fermé avec une pluralité d'angles (60), et dans lequel lesdites ouvertures sont agencées dans lesdits angles (60).

5. Élément de palier (65) selon la revendication 4, dans lequel les disques annulaires (44) présentent la forme d'un octogone.

6. Élément de palier (65) selon l'une quelconque des revendications précédentes, dans lequel les disques annulaires (44) sont fabriqués à partir de métal en feuille laminé à froid, tel que de l'acier laminé à froid.

7. Élément de palier (65) selon l'une quelconque des revendications précédentes, dans lequel l'épaisseur des disques annulaires individuels dans le paquet de disques annulaires est inférieure à 1 mm.

8. Élément de palier (65) selon l'une quelconque des revendications précédentes, dans lequel l'au moins un élément de fixation (64) attache l'élément d'inclinaison (41) au logement de palier (20) dans chaque deuxième ouverture de l'élément d'inclinaison (41).

9. Élément de palier (65) selon l'une quelconque des revendications précédentes, dans lequel le palier (32) est un palier à rouleaux autre qu'un roulement à rotule sur rouleaux.

10. Appareil (70) comprenant
- un élément de machine fixe (71) ;
- un arbre rotatif (72) supporté par au moins un élément de palier (65) selon l'une quelconque des revendications 1 à 9 ; dans lequel le logement de palier (20) de l'élément de palier (65) est attaché en outre à l'élément de machine fixe (71) par l'intermédiaire dudit élément d'inclinaison (41).

11. Appareil selon la revendication 10, comprenant en outre au moins un élément de fixation (64) attachant l'élément d'inclinaison (41) au logement de palier (20) dans chaque deuxième ouverture de l'élément d'inclinaison (41) et attachant l'élément d'inclinaison (41) à l'élément de machine fixe (71) dans chaque deuxième ouverture de l'élément d'inclinaison (41).

12. Appareil (70) selon la revendication 10 ou 11, dans lequel l'arbre rotatif (72) est un arbre vertical.

13. Appareil (70) selon la revendication 10 ou 11, dans lequel l'arbre rotatif (72) est un arbre horizontal.
